# EUROPEAN PATENT SPECIFICATION

(11) **EP 4 489 157 B1**
(45) Date of publication and mention of the grant of the patent: **04.11.2026**
(21) Application number: 23912705.3
(22) Date of filing: 15.12.2023
(51) Int. Cl.: H01M 10/04, H01M 10/0583, B65H 5/08, B65H 29/24

(54) **POWER SUPPLY DEVICE, DEVICE FOR MANUFACTURING ELECTRODE ASSEMBLY USING SAME, ELECTRODE SUPPLY METHOD, AND METHOD FOR MANUFACTURING ELECTRODE ASSEMBLY USING SAME**
STROMVERSORGUNGSVORRICHTUNG, VORRICHTUNG ZUR HERSTELLUNG EINER ELEKTRODENANORDNUNG DAMIT, ELEKTRODENVERSORGUNGSVERFAHREN UND VERFAHREN ZUR HERSTELLUNG EINER ELEKTRODENANORDNUNG DAMIT
DISPOSITIF D'ALIMENTATION ÉLECTRIQUE, DISPOSITIF DE FABRICATION D'ENSEMBLE ÉLECTRODE L'UTILISANT, PROCÉDÉ D'ALIMENTATION D'ÉLECTRODE ET PROCÉDÉ DE FABRICATION D'ENSEMBLE ÉLECTRODE L'UTILISANT

(30) Priority: 26.12.2022 KR 20220184440
(43) Date of publication of application: 08.01.2025
(73) Proprietor: LG Energy Solution, Ltd., Seoul 07335 (KR)
(72) Inventor: KIM, Nam Young, Daejeon 34122 (KR)
(74) Representative: Goddar, Heinz J.
(86) International application number: PCT/KR2023/020736
(87) International publication number: WO 2024/144030

(56) References cited:
- DE-B4- 102012 104 624
- KR-A- 20090 081 713
- KR-A- 20090 081 713
- KR-A- 20090 108 477
- KR-A- 20200 023 853
- KR-A- 20200 023 853
- KR-A- 20220 099 890
- KR-A- 20220 099 890
- KR-B1- 101 416 328
- KR-B1- 101 416 328

## Description

### [Technical Field]

This application claims priority to and the benefit of Korean Patent Application No. 10-2022-0184440 filed in the Korean Intellectual Property Office on December 26, 2022.

The present invention relates to a system including an electrode supply device, an electrode assembly manufacturing apparatus using the system with the electrode supply device, an electrode supply method, and an electrode assembly manufacturing method using the electrode supply method.

### [Background Art]

KR 2022 0099890 A relates to a device for manufacturing a high-speed cell stack for a secondary battery.

KR 2009 0081713 A relates to an automatic laminating apparatus for a fuel cell stack, which comprises an adsorption apparatus for adsorbing and moving a membrane electrode assembly (MEA) and a separator plate, and a CCD camera for detecting failures in stacking.

KR 2020 0023853 A relates to an electrode assembly manufacturing apparatus.

KR 101 416 328 B1 relates to a protective interlayer for display liquid crystal glass and a method for manufacturing the same.

DE 10 2012 104624 B4 relates to a device and method for stacking sheets.

Secondary batteries can be recharged, unlike primary batteries, and may be formed to have a small size and a large capacity. Accordingly, a lot of research and development on the secondary batteries are currently in progress. As technology development and demand for mobile devices increase, the demand for secondary batteries as an energy source is sharply increasing.

Secondary batteries are classified into coin type batteries, cylindrical type batteries, prismatic type batteries, and pouch type batteries depending on a shape of a battery case. In a secondary battery, an electrode assembly mounted inside a battery case is a chargeable and dischargeable power generating device having a structure in which electrodes and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator interposed therebetween are sequentially stacked, and a stack and folding-type electrode assembly in which stack-type unit cells are wound with a separation film having a long length.

The electrode assembly is mostly manufactured by receiving individual electrodes from a magazine in which a plurality of single sheet-type electrodes are stacked. There is a problem that defects occur in the manufactured electrode assembly because an electrode to be supplied among the plurality of single sheet-type electrodes stacked in the magazine is not properly separated during the manufacturing process.

Therefore, there is a need for technology to properly separate an electrode to be supplied among the plurality of electrodes stacked in the magazine.

### <Citation List>

### <Patent Literature>

Korean Patent Application Publication No. 10-2013-0027918

### [Detailed Description of the Invention]

### [Technical Problem]

The present invention is to provide a system including an electrode supply device, an electrode assembly manufacturing apparatus using the system with the electrode supply device, an electrode supply method, and an electrode assembly manufacturing method using the electrode supply method.

### [Technical Solution]

The invention is defined in the appended claims.

An exemplary embodiment of the present invention provides a system including a stuck-electrodes prevention sheet having the form of a net and an electrode supply device including: a first magazine unit in which a plurality of electrodes are stacked; the stuck-electrodes prevention sheet arranged between the plurality of respective electrodes; an electrode pickup unit configured to pick up an uppermost electrode among the plurality of electrodes; and a stuck-electrodes prevention sheet pickup unit configured to remove the stuck-electrodes prevention sheet from the first magazine unit.

An exemplary embodiment of the present invention provides an electrode assembly manufacturing apparatus for manufacturing an electrode assembly in which a first electrode and a second electrode are alternately arranged between folds of a separator, the electrode assembly manufacturing apparatus including: a first electrode supply unit configured to supply the first electrode to a stack table side; a second electrode supply unit configured to supply the second electrode to the stack table side; a separator supply unit configured to supply the separator to the stack table side; a stack table on which a stack in which the first electrode, the separator, and the second electrode are stacked such that the first electrode and the second electrode are alternately arranged between the folds of the separator is manufactured; and a press unit configured to heat and press the stack to adhere the first electrode, the separator, and the second electrode therebetween, thereby manufacturing an electrode assembly, wherein at least one of the first electrode supply unit and the second electrode supply unit includes the above-described system including the electrode supply device.

An exemplary embodiment of the present invention provides an electrode supply method including (S1) stacking a plurality of electrodes and stuck-electrodes prevention sheets having the form of a net between the plurality of respective electrodes in a first magazine unit; (S2) picking up and conveying an uppermost electrode among the plurality of electrodes to a stack table; and (S3) removing a stuck-electrodes prevention sheet exposed as the uppermost electrode is picked up from the first magazine unit.

Finally, an exemplary embodiment of the present invention provides an electrode assembly manufacturing method for manufacturing an electrode assembly in which a first electrode and a second electrode, are alternately arranged between folds of a separator, the electrode assembly manufacturing method including: supplying the first electrode to a stack table side; supplying the second electrode to the stack table side; supplying the separator to the stack table side; manufacturing a stack by stacking the first electrode, the separator, and the second electrode on the stack table such that the first electrode and the second electrode are alternately arranged between the folds of the separator; and heating and pressing the stack to adhere the first electrode, the separator, and the second electrode therebetween, thereby manufacturing an electrode assembly, wherein at least one of the supplying the first electrode to the stack table side and the supplying the second electrode to the stack table side includes the above-described electrode supply method.

### [Advantageous Effects]

The electrode supply method, the system including the electrode supply device, the electrode assembly manufacturing apparatus using the system with the device, and the electrode assembly manufacturing method using the method according to the exemplary embodiments of the present invention can prevent a problem of separation of multiple sheets caused by contact between an electrode surface and an electrode surface or contact between the electrode surface and the separator.

The electrode supply method, the electrode supply device, the electrode assembly manufacturing apparatus using the device, and the electrode assembly manufacturing method using the method according to the exemplary embodiments of the present invention can prevent a problem of separation of multiple sheets (electrodes) (stuck electrodes that are stuck together) to thus increase stability and productivity.

### [Brief Description of Drawings]

FIG. 1 is a view showing a process of separating an electrode in an electrode supply device and an electrode supply method according to an exemplary embodiment of the present invention.
FIG. 2 is a plan view illustratively showing an electrode assembly manufacturing apparatus according to an exemplary embodiment of the present invention.
FIG. 3 is a front view showing a concept of the electrode assembly manufacturing apparatus according to the exemplary embodiment of the present invention.
FIG. 4 is a cross-sectional view illustratively showing a general electrode assembly.
FIG. 5 is a conceptual view showing a pressing process in the electrode assembly manufacturing method or electrode assembly manufacturing apparatus according to the exemplary embodiment of the present invention.
FIG. 6(a) is a perspective view showing a first press unit 50 according to an exemplary embodiment of the present invention, and FIG. 6(b) is a perspective view showing a second press unit 60 according to an exemplary embodiment of the present invention.
FIG. 7 is a perspective view showing a stack table in the electrode assembly manufacturing apparatus according to the exemplary embodiment of the present invention.
FIG. 8 is a perspective view showing a first electrode seating table in the electrode assembly manufacturing apparatus according to the exemplary embodiment of the present invention.
FIG. 9 is a perspective view showing a second electrode seating table in the electrode assembly manufacturing apparatus according to the exemplary embodiment of the present invention.
FIG. 10 is a perspective view showing a first suction head in the electrode assembly manufacturing apparatus according to the exemplary embodiment of the present invention.
FIG. 11 is a bottom view showing the first suction head in the electrode assembly manufacturing apparatus according to the exemplary embodiment of the present invention.
FIG. 12 is a plan view showing a holding mechanism and a stack table in the electrode assembly manufacturing apparatus according to the exemplary embodiment of the present invention.

### [Best Mode]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, 'p to q' means a range of 'p or more and q or less'.

When describing the present invention, detailed descriptions of related known technologies that may unnecessarily obscure the gist of the present invention will be omitted.

An exemplary embodiment of the present invention provides an electrode supply device including: a first magazine unit in which a plurality of electrodes are stacked; a stuck-electrodes prevention sheet having the form of a net arranged between the plurality of respective electrodes; an electrode pickup unit configured to pick up an uppermost electrode among the plurality of electrodes; and a stuck-electrodes prevention sheet pickup unit configured to remove the stuck-electrodes prevention sheet from the first magazine unit.

In the present specification, the 'electrode' means including the electrode and/or a semi-finished product of the electrode. In addition, the semi-finished product of the electrode refers to all semi-assembled products related to the electrode, such as a coated electrode, a rolled electrode, and a notched electrode manufactured in the process of manufacturing an electrode assembly and a secondary battery including the electrode assembly. That is, in the present specification, electrodes or semi-finished products of electrodes may be stacked in the electrode magazine unit.

In the present specification, the term 'separation of multiple electrodes' (stuck electrodes that are stuck together without being separated) refers to a phenomenon that during a process of separating stacked electrodes, adhesive force generated by foreign matters present on surfaces of the electrodes interferes with separation of the electrodes.

In other words, in the present specification, the 'stuck-electrodes prevention sheet' refers to a sheet for preventing the phenomenon of separation of multiple electrodes in which unnecessary adhesive force that interferes with separation of the electrodes is generated during the process of separating the stacked electrodes.

In the present specification, 'first magazine unit' may refer to 'electrode magazine unit', and the 'electrode magazine unit' performs the function of stacking electrodes in a certain space therein like bullets in a magazine. The electrode supply device according to an exemplary embodiment of the present invention has such a feature that separate stuck-electrodes prevention sheets are stacked so that the sheets are arranged between electrodes inside the first magazine unit, respectively, and then the electrodes and the stuck-electrodes prevention sheets are alternately conveyed or removed. The separate stuck-electrodes prevention sheets are arranged between the electrodes, respectively, so that the problem of separation of multiple electrodes caused by contact between an electrode surface and an electrode surface or contact between the electrode surface and the separator can be prevented.

As a result, when the electrode assembly is manufactured by the electrode supply device and the electrode assembly manufacturing apparatus using the electrode supply device according to the exemplary embodiments of the present invention, productivity can be improved.

The electrode supply device includes a first magazine unit in which electrodes are stacked. The first magazine unit performs the function of stacking electrodes.

In addition, the electrode supply device of the system according to an exemplary embodiment of the present invention includes a first magazine unit in which electrodes and stuck-electrodes prevention sheets having the form of a net are stacked such that an electrode is positioned on an uppermost side and electrodes and stuck-electrodes prevention sheets are alternately stacked.

The electrode supply device includes an electrode pickup unit that picks up and conveys the uppermost electrode among the electrodes stacked inside the first magazine unit to a stack table. More specifically, the electrode pickup unit may include an electrode fixing unit for fixing the uppermost electrode; and an electrode conveying unit for conveying the uppermost electrode fixed by the electrode fixing unit to the stack table side.

The electrode supply device includes a stuck-electrodes prevention sheet pickup unit for removing, from the first magazine unit, an uppermost stuck-electrodes prevention sheet among the stuck-electrodes prevention sheets stacked inside the first magazine unit. More specifically, the stuck-electrodes prevention sheet pickup unit may include a stuck-electrodes prevention sheet fixing unit for fixing the uppermost stuck-electrodes prevention sheet; and a stuck-electrodes prevention sheet extraction unit for removing the uppermost stuck-electrodes prevention sheet fixed by the stuck-electrodes prevention sheet fixing unit.

In the present specification, 'removing the stuck-electrodes prevention sheet' means conveying the stuck-electrodes prevention sheet to a position other than the stack table and not using the same in the stacking step of the electrode assembly.

In an exemplary embodiment of the present invention, the electrode supply device may further include a second magazine unit in which the removed stuck-electrodes prevention sheet is stacked for reusing the stuck-electrodes prevention sheet removed by the stuck-electrodes prevention sheet pickup unit. That is, after separately sorting the removed stuck-electrodes prevention sheets, the sorted stuck-electrodes prevention sheets can be reused by stacking them inside the first magazine unit in a form of being positioned between electrodes. With this, the process cost can be reduced.

In an exemplary embodiment of the present invention, the stuck-electrodes prevention sheet may be made of aluminum, but is not limited thereto, and any material that does not cause a problem when coming into contact with an electrode may be used. When using the above material, it is easier to prevent the problem of separation of multiple electrodes.

In the present invention, the stuck-electrodes prevention sheet have a form of a net, and the net may be formed in a certain pattern. When the stuck-electrodes prevention sheet has a net shape, it is easier to prevent the problem of separation of multiple electrodes because the surface is not smooth.

In an exemplary embodiment of the present invention, an electrode seating table may be further included on which the electrode conveyed by the electrode supply device is seated and positionally aligned. The electrode seated on the electrode seating table may be stacked on the stack table by an electrode stacking unit, which will be described below.

An exemplary embodiment of the present invention provides an electrode assembly manufacturing apparatus for manufacturing an electrode assembly in which a first electrode and a second electrode are alternately arranged between folds of a separator, the electrode assembly manufacturing apparatus including: a first electrode supply unit configured to supply the first electrode to a stack table side; a second electrode supply unit configured to supply the second electrode to the stack table side; a separator supply unit configured to supply the separator to the stack table side; a stack table on which a stack in which the first electrode, the separator, and the second electrode are stacked such that the first electrode and the second electrode are alternately arranged between the folds of the separator is manufactured; and a press unit configured to heat and press the stack to adhere the first electrode, the separator, and the second electrode therebetween, thereby manufacturing an electrode assembly, wherein at least one of the first electrode supply unit and the second electrode supply unit includes the above-described electrode supply device.

In an exemplary embodiment of the present invention, the first electrode supply unit includes the electrode supply device described above.

In an exemplary embodiment of the present invention, the second electrode supply unit includes the electrode supply device described above.

In an exemplary embodiment of the present invention, the first electrode supply unit and the second electrode supply unit each include the electrode supply device described above.

That is, the first electrode supply unit and the second electrode supply unit may supply the first electrode and the second electrode, respectively, using the electrode supply device according to the present invention.

In other words, the electrode assembly manufacturing apparatus according to an exemplary embodiment of the present invention may include an electrode supply unit for supplying an electrode to the stack table, and the electrode supply unit may include an electrode seating table on which an electrode is seated before the electrode is stacked on the stack table by the electrode stacking unit. In addition, an electrode conveyed by the electrode supply device according to the present invention may be seated and positionally aligned on the electrode seating table. The electrode whose position is aligned may be stacked on the stack table by the electrode stacking unit. Additionally, the electrode may be a first electrode or a second electrode.

In the present specification, manufacturing a stack in which the first electrode and the second electrode are stacked in the form of being alternately arranged between respective folds of the separator is referred to as zigzag folding.

In the present specification, the stack may correspond to an unfinished electrode assembly. Additionally, in the present specification, a top end and a bottom end of the electrode assembly may be located at positions corresponding to an upper surface and a lower surface of the stack, respectively, or positions corresponding to a bottom surface and a top surface of the unfinished electrode assembly.

That is, in an exemplary embodiment of the present invention, the first electrode supply unit may include the first electrode supply device, and the second electrode supply unit may include the second electrode supply device. The first electrode supply device and the second electrode supply device may each be the electrode supply device according to the present invention.

In the electrode assembly manufacturing apparatus according to an exemplary embodiment of the present invention, the first electrode supply unit may include a first electrode seating table on which the first electrode is seated before being stacked on the stack table by the first electrode stack unit, and the second electrode supply unit may include a second electrode seating table on which the second electrode is seated before being stacked on the stack table by the second electrode stack unit.

In an exemplary embodiment of the present invention, in order to stack the first electrode, the separator, and the second electrode such that the first electrode and the second electrode are alternately arranged between the folds of the separator, a method in which the stack table is moved left and right, a method in which the separator is moved left and right, or a method in which the stack table is rotated may be used, and general techniques in the relevant field may be applied to such methods.

The electrode assembly manufacturing apparatus according to an exemplary embodiment of the present invention may include a stack table moving unit for moving the stack table left and right, or a separator guide unit for moving the separator left and right. In addition, the stack table moving unit and the separator guide unit are not limited in forms as long as they respectively perform the functions of moving the stack table and the separator left and right, and devices generally used in the relevant field may be used.

In an exemplary embodiment of the present invention, the press unit may further include a pair of the pressing blocks and a press heater for heating the pressing blocks, in which the pair of pressing blocks may move in directions facing each other to surface-press the stack and the press heater may heat the stack. In this case, in an exemplary embodiment of the present invention, the pair of the pressing blocks may include the press heater therein.

In an exemplary embodiment of the present invention, the stack may be heated using a heater included inside the stack table.

For pressure and temperature conditions of heating and pressing by the press unit, description of a condition of a heat-press step described below may be applied. The same also applies to the time (time condition) during which heating and pressure are applied.

Here, the pressure condition refers to a pressure applied by the pair of pressing blocks (or the pressing blocks for the stack table), and the temperature condition refers to a temperature of heat applied by the press heater or a heater included inside the stack table.

In an exemplary embodiment of the present invention, a gripper for fixing the stack, in which the first electrode, the separator, and the second electrode are stacked, during the heating and pressing by the press unit may be further included. Specifically, the gripper may be applied in a first heat-press step described later.

In an exemplary embodiment of the present invention, the press unit may include a first press unit and a second press unit. Specifically, the first press unit and the second press unit may be applied to a first heat-press step and a second heat-press step, respectively, described below, and for the heating condition and pressing condition, descriptions of the first heat-press step and the second heat-press step described below may be applied.

In an exemplary embodiment of the present invention, the first press unit may include a pair of first pressing blocks, pressing surfaces of the pair of first pressing blocks may include a groove of a shape corresponding to the gripper, and the pressing surfaces other than the grooves may be provided as planar surfaces. That is, the first press unit may be applied in the first heat-press step described above.

In an exemplary embodiment of the present invention, the second press unit may include a pair of second pressing blocks, and pressing surfaces of the pair of second pressing blocks may be provided as planar surfaces. That is, the second press unit may be applied in the second heat-press step described above.

The electrode assembly manufacturing apparatus according to an exemplary embodiment of the present invention may further include a holding mechanism for gripping and fixing the stack during a process of manufacturing the stack.

In the present specification, the "holding mechanism" serves to grip a stack stacked on a stack table in order to stack a first electrode or a second electrode during a process of manufacturing the stack in which the first electrode, the separator, and the second electrode are stacked in such a form that the first electrode and the second electrode are alternately arranged between respective folds of the separator folded on the stack table, and has a different function from a gripper that grips the stack during a process of heating and pressing the stack. For the specific operating process of the holding mechanism, the description of the electrode assembly manufacturing method described below may be referred to.

An exemplary embodiment of the present invention provides an electrode supply method including: (S1) stacking a plurality of electrodes and stuck-electrodes prevention sheets between the plurality of respective electrodes, so that electrodes in a first magazine unit; (S2) picking up and conveying an uppermost electrode among the plurality of electrodes to a stack table; and (S3) removing a stuck-electrodes prevention sheet exposed as the uppermost electrode is picked up from the first magazine unit.

In addition, an exemplary embodiment of the present invention provides the electrode supply method further including the step of performing the step (S2) after the step of (S4) removing a stuck-electrodes prevention sheet, wherein the steps (S2) to (S4) are repeated until the electrodes and the stuck-electrodes prevention sheets in the first magazine unit are all removed.

The electrode supply method according to an exemplary embodiment of the present invention has such a feature that separate stuck-electrodes prevention sheets are stacked so that the sheets are arranged between electrodes inside the first magazine unit, respectively, and then the electrodes and the stuck-electrodes prevention sheets are alternately conveyed or removed. The separate stuck-electrodes prevention sheets are arranged between the electrodes, respectively, so that the problem of separation of multiple electrodes caused by contact between an electrode surface and an electrode surface or contact between the electrode surface and the separator can be prevented.

As a result, when the electrode assembly is manufactured by the electrode supply method and the electrode assembly manufacturing method using the electrode supply method according to the exemplary embodiments of the present invention, productivity can be improved.

In an exemplary embodiment of the present invention, the electrode supply method may further include the steps of stacking the stuck-electrodes prevention sheet removed from the first magazine unit on a second magazine unit; and picking up and reusing the stuck-electrodes prevention sheet from the second magazine unit.

In an exemplary embodiment of the present invention, the electrode supply method may further include the step of cutting the electrode and the stuck-electrodes prevention sheet, respectively, before stacking the electrode and the stuck-electrodes prevention sheet inside the first magazine unit.

In an exemplary embodiment of the present invention, the electrode supply method may further include the step of aligning a position of the conveyed electrode before supplying the electrode to the stack table. For the above step, the description of the electrode seating table described above may be applied.

In the electrode supply method according to an exemplary embodiment of the present invention, the stuck-electrodes prevention sheet may be made of aluminum, but is not limited thereto, and any material that does not cause a problem when coming into contact with an electrode may be used. When using the above material, it is easier to prevent the problem of separation of multiple electrodes.

In the electrode supply method according to the present invention, the stuck-electrodes prevention sheet has a form of a net, and the may be formed in a certain pattern. When the stuck-electrodes prevention sheet has a net shape, it is easier to prevent the problem of separation of multiple electrodes because the surface is not smooth.

An exemplary embodiment of the present invention provides an electrode assembly manufacturing method for manufacturing an electrode assembly in which a first electrode and a second electrode, are alternately arranged between folds of a separator, the electrode assembly manufacturing method including the steps of: supplying the first electrode to a stack table side; supplying the second electrode to the stack table side; supplying the separator to the stack table side; manufacturing a stack by stacking the first electrode, the separator, and the second electrode on the stack table such that the first electrode and the second electrode are alternately arranged between the folds of the separator; and heating and pressing the stack to adhere the first electrode, the separator, and the second electrode therebetween, thereby manufacturing an electrode assembly, wherein at least one of the steps of supplying the first electrode to the stack table side and supplying the second electrode to the stack table side includes the above-described electrode supply method.

In an exemplary embodiment of the present invention, the step of supplying the first electrode to the stack table side includes the electrode supply method described above.

In an exemplary embodiment of the present invention, the step of supplying the second electrode to the stack table side includes the electrode supply method described above.

In an exemplary embodiment of the present invention, the step of supplying the first electrode to the stack table side and the step of supplying the second electrode to the stack table side each include the electrode supply method described above.

That is, both the step of supplying the first electrode to the stack table side and the step of supplying the second electrode to the stack table side may supply the first electrode and the second electrode, respectively, using the electrode supply method according to the present invention.

In an exemplary embodiment of the present invention, the step of manufacturing the stack by stacking the first electrode, the separator, and the second electrode on the stack table such that the first electrode and the second electrode are alternately arranged between the folds of the separator may include the steps of:
(S1-1) stacking the second electrode on the stack table;
(S2-1) stacking the separator on the stack table such that the separator covers an upper surface of the second electrode stacked on the stack table;
(S3-1) stacking the first electrode on a surface of the separator covering the upper surface of the second electrode, which is opposite to a surface in contact with the second electrode;
(S4-1) additionally supplying the separator to cover an upper surface of the first electrode;
(S5-1) stacking the second electrode on a surface of the separator covering the upper surface of the first electrode, which is opposite to a surface in contact with the first electrode; and
(S6-1) additionally supplying the separator to cover an upper surface of the second electrode, and
may be configured to repeat the steps (S1-1) to (S6-1) one or more times. That is, this case means a case where an electrode is first stacked on the stack table.

In an exemplary embodiment of the present invention, the step of manufacturing the stack by stacking the first electrode, the separator, and the second electrode on the stack table such that the first electrode and the second electrode are alternately arranged between the folds of the separator may include the steps of:
(SS1-1) stacking the separator on the stack table;
(SS2-1) stacking the first electrode on an upper surface of the separator;
(SS3-1) additionally supplying the separator to cover an upper surface of the first electrode;
(SS4-1) stacking the second electrode on a surface of the separator covering the upper surface of the first electrode, which is opposite to a surface in contact with the first electrode; and
(SS5-1) additionally supplying the separator to cover an upper surface of the second electrode, and
may be configured to repeat the steps (SS1-1) to (SS5-1) one or more times. That is, this case means a case where a separator is first stacked on the stack table.

In an exemplary embodiment of the present invention, the step (S4-1), step (S6-1), step (SS3-1), and step (SS5-1), that is, the step of additionally supplying the separator to cover the upper surface of the first electrode or second electrode may be performed by one of a method in which the stack table is moved left and right, a method in which the separator is moved left and right, and a method in which the stack table is rotated.

In an exemplary embodiment of the present invention, the separator may be supplied in a form of a separator sheet. That is, the separator to be additionally supplied may be supplied in a continuous form. In addition, the "upper surface" may refer to a surface of the separator or electrode opposite to a surface facing the stack table.

That is, in order to stack the first electrode, the separator, and the second electrode such that the first electrode and the second electrode are alternately arranged between the folds of the separator, a method in which the stack table is moved left and right, a method in which the separator is moved left and right, or a method in which the stack table is rotated may be used, and general techniques in the relevant field may be applied to such methods.

In this case, the stack can be gripped by a holding mechanism to maintain alignment of the stack during the processes of adding the first electrode, the second electrode, and the separator, so that a stack in which the first electrode and the second electrode are alternately arranged between the folds of the separator can be manufactured.

In an exemplary embodiment of the present invention, the electrode assembly manufacturing method may further include a heat-press step of heating and pressing the stack along a stacking axis.

In addition, in an exemplary embodiment of the present invention, the heat-press step of heating and pressing the stack along the stacking axis may include the steps of moving the stack to a space between a pair of pressing blocks including a press heater; surface-pressing the stack by the pair of pressing blocks moving in directions facing each other along the stacking axis; and heating the stack by the press heater.

Additionally, in an exemplary embodiment of the present invention, the heat-press step may include: a first heat-press step of gripping the stack with a gripper and heating and pressing the stack; and a second heat-press step of stopping the gripping of the gripper and heating and pressing the stack after the first heat-press step.

In an exemplary embodiment of the present invention, the first heat-press step may include the steps of fixing the stack by pressing an upper surface of the stack using a gripper; moving the stack fixed by the gripper to a space between a pair of pressing blocks including a press heater; surface-pressing the fixed stack by the pair of pressing blocks moving in directions facing each other along a stacking axis of the stack; and heating the fixed stack by the press heater.

In an exemplary embodiment of the present invention, the second heat-press step may include the steps of stopping heating and pressing the stack after the first heat-press step; spacing the gripper apart from the stack; moving the stack from which the gripper is spaced apart to a space between a pair of pressing blocks including a press heater; pressing the stack by the pair of pressing blocks moving in directions facing each other along a stacking axis of the stack from which the gripper is spaced apart; and heating the stack by the press heater.

In an exemplary embodiment of the present invention, the pressing blocks used in the first heat-press step may have a groove corresponding to the gripper.

In an exemplary embodiment of the present invention, the step of spacing the gripper apart from the stack may include the steps of stopping pressing the upper surface of the stack using the gripper; and spacing the gripper apart from the stack.

In addition, the step of moving the stack to a space between the pair of pressing blocks including the press heater in the heat-press step (including the first heat-press step and the second heat-press step) may include not only moving only the stack itself but also moving the stack together with the stack table in a state in which the stack is placed on the stack table. In this case, a target to be heated and pressed by the pair of pressing blocks and the press heater may refer to the stack and the stack table.

In an exemplary embodiment of the present invention, the first heat-press step may be configured to heat and press the stack under a temperature condition of 65°C to 90°C and a pressure condition of 1 MPa to 3 MPa for 10 seconds to 30 seconds. More preferably, the stack may be heated and pressed for 10 seconds to 20 seconds under a temperature condition of 65°C to 75°C and a pressure condition of 1.5 MPa to 2 MPa.

In an exemplary embodiment of the present invention, the second heat-press step may be configured to heat and press the stack under a temperature condition of 50°C to 90°C and a pressure condition of 1 MPa to 6 MPa for 5 seconds to 60 seconds, preferably under a temperature condition of 65°C to 90°C and a pressure condition of 1.5 MPa to 6 MPa for 5 seconds to 30 seconds. More preferably, the stack may be heated and pressed for 7 seconds to 25 seconds under a temperature condition of 65°C to 85°C and a pressure condition of 3 MPa to 5.5 MPa.

When heated and pressed while satisfying the conditions described above, the adhesion of the electrodes and separator of the stack including the first electrode, the separator, and the second electrode may be easily obtained without damaging the first electrode, the separator, and the second electrode, and performance of the manufactured electrode assembly may be excellent.

Additionally, in an exemplary embodiment of the present invention, the conditions of the second heat-press described above may be applied to the temperature condition, pressure condition, and time condition of the heat-press step. That is, the heat-press step may be configured to heat and press the stack under a temperature condition of 50°C to 90°C and a pressure condition of 1 MPa to 6 MPa for 5 seconds to 60 seconds, preferably under a temperature condition of 65°C to 90°C and a pressure condition of 1.5 MPa to 6 MPa for 5 seconds to 30 seconds. More preferably, the stack may be heated and pressed for 7 seconds to 25 seconds under a temperature condition of 65°C to 85°C and a pressure condition of 3 MPa to 5.5 MPa.

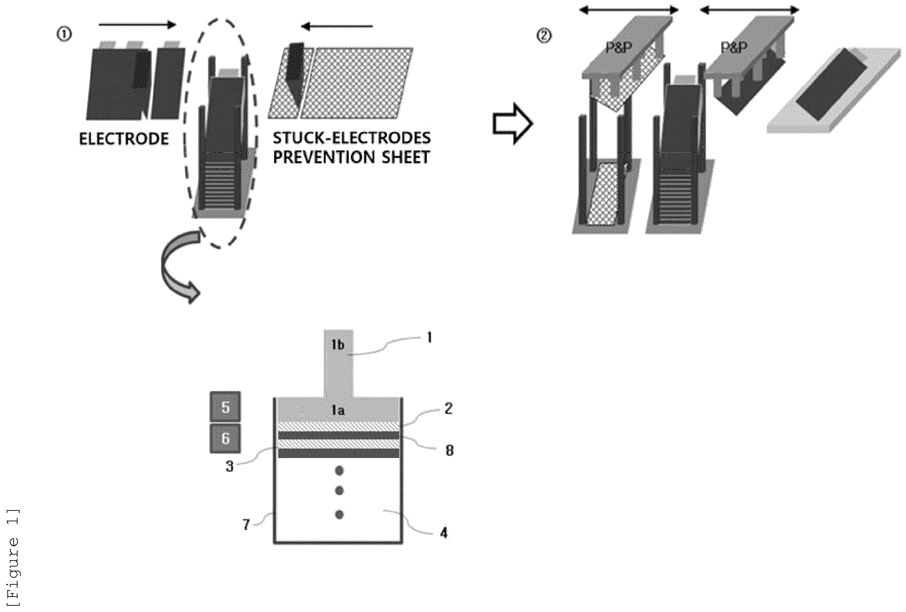

Hereinafter, the electrode assembly manufacturing method and the electrode assembly manufacturing apparatus according to an exemplary embodiment of the present invention will be described in more detail with reference to FIGS. 1 to 13.

FIG. 1 is a view showing a process of separating an electrode in an electrode supply method and an electrode supply device according to an exemplary embodiment of the present invention. As shown in FIG. 1, in a first magazine unit 7, an uppermost electrode 2 among stacked electrodes, a stuck-electrodes prevention sheet 8 in contact with the uppermost electrode, a second one electrode 3 stacked before the uppermost electrode and in contact with a lower surface of the stuck-electrodes prevention sheet 8 in contact with the uppermost electrode, and a plurality of other electrodes and stuck-electrodes prevention sheets 4 are stacked. In this case, the stuck-electrodes prevention sheets 8 are stacked between electrodes of the plurality of other electrodes and stuck-electrodes prevention sheets 4, respectively.

Then, the uppermost electrode 2 among the stacked electrodes is picked up and conveyed by an electrode pickup unit 1. In this case, the electrode pickup unit 1 may include an electrode fixing unit 1a and a conveying unit 1b. After the uppermost electrode among the electrodes stacked inside the first magazine unit is picked up and conveyed, the stuck-electrodes prevention sheet 8 is placed on the uppermost side of the stack stacked inside the first magazine unit. In this way, after the stuck-electrodes prevention sheet 8 in contact with the uppermost electrode is placed on the uppermost side, the stuck-electrodes prevention sheet 8 is picked up using a stuck-electrodes prevention sheet pickup unit and can be removed. When the stuck-electrodes prevention sheet is removed, the second one electrode 3 becomes an uppermost electrode among the electrodes stacked inside the first magazine unit 7. In this case, a second magazine unit (not shown) in which the removed stuck-electrodes prevention sheet is stacked for reusing the removed stuck-electrodes prevention sheet may be further included. The above process can be repeated until all of the electrodes and the stuck-electrodes prevention sheets inside the first magazine unit are conveyed or removed.

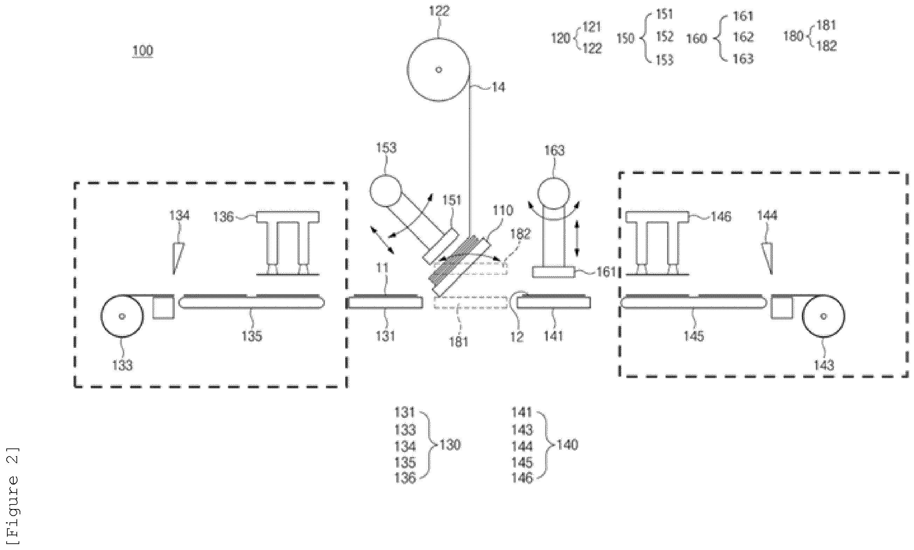

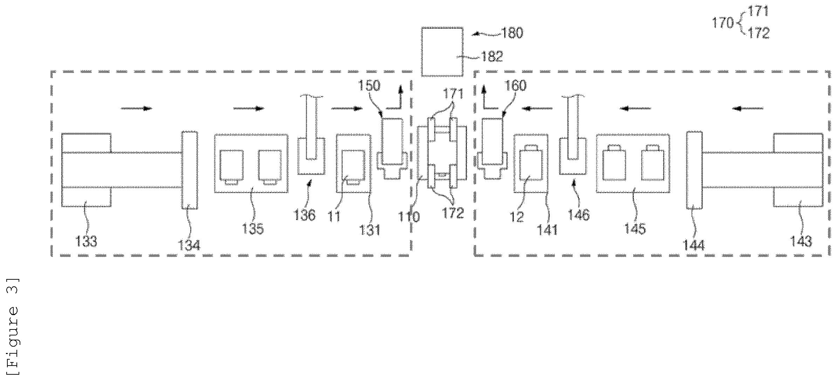

FIG. 2 is a plan view illustratively showing an electrode assembly manufacturing apparatus according to an exemplary embodiment of the present invention, and FIG. 3 is a front view showing a concept of the electrode assembly manufacturing apparatus according to the exemplary embodiment of the present invention. Here, for convenience, in FIG. 2, a holding mechanism 170 shown in FIG. 3 is omitted, and a press unit 180 positioned on a rear side in the plan view is indicated by the dotted line, and in FIG. 3, a separator supply unit 120 shown in FIG. 2 is omitted. For reference, the description related to FIG. 1 may be applied to the portion indicated by the dotted lines in FIGS. 2 and 3.

Referring to FIGS. 1 to 3, an electrode assembly manufacturing apparatus 100 according to an exemplary embodiment of the present invention includes a stack table 110, a separator supply unit 120 that supplies a separator 14, a first electrode supply unit 130 that supplies a first electrode 11, a second electrode supply unit 140 that supplies a second electrode 12, a first electrode stack unit 150 that stacks the first electrode 11 on the stack table 110, a second electrode stack unit 160 that stacks the second electrode 12 on the stack table **110,** and a press unit 180 that adheres the first electrode 11, the separator 14, and the second electrode 12 therebetween. In addition, the electrode assembly manufacturing apparatus 100 according to an exemplary embodiment of the present invention may further include a holding mechanism 170 for fixing the first electrode 11 and the second electrode 12 when they are stacked on the stack table 110.

In addition, in an exemplary embodiment of the present invention, the first electrode, the separator, and the second electrode may be supplied to the stack table while being heated.

That is, the separator supply unit may supply the separator to the stack table while heating the separator, and the first electrode supply unit and the second electrode supply unit may supply the first electrode and the second electrode to the stack table while heating the first electrode and the second electrode, respectively.

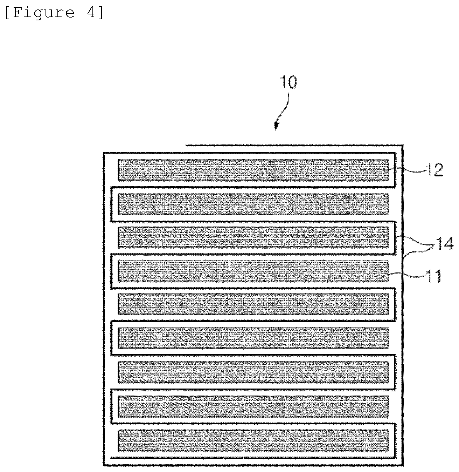

FIG. 4 is a cross-sectional view illustratively showing an electrode assembly. A secondary battery according to the present invention may include the electrode assembly.

Referring to FIGS. 2 to 4, the electrode assembly manufacturing apparatus 100 according to an exemplary embodiment of the present invention is an apparatus that stacks the first electrode 11, the separator 14, and the second electrode 12 to manufacture an electrode assembly 10.

As shown in FIG. 3, the electrode assembly 10 is generally a chargeable/dischargeable power generating element, and may be formed in such a shape that the first electrode 11, the separator 14, and the second electrode 12 are alternately stacked and assembled. Here, the electrode assembly 10 may have such a form that the separator 14 is folded in a zigzag shape, for example, and the first electrode 11 and the second electrode 12 are alternately arranged between the folds of the separator 14. In this case, as shown in FIG. 3, the electrode assembly 10 may be provided in such a form that the separator 14 surrounds the outermost of the electrode assembly.

In an exemplary embodiment of the present invention, the separator supply unit may further include a separator roll on which the separator is wound. The separator wound on the separator roll may be gradually unwound and supplied to the stack table. That is, the separator may be in the form of a separator sheet.

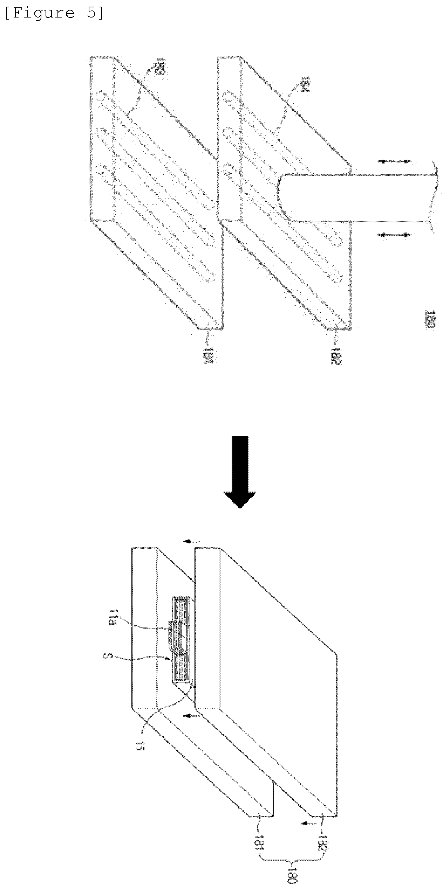

FIG. 5 is a perspective view illustratively showing a press unit of an electrode assembly manufacturing apparatus according to an exemplary embodiment of the present invention and a state in which the press unit presses a stack in the electrode assembly manufacturing apparatus according to the exemplary embodiment of the present invention.

Referring to FIGS. 2, 3, and 5, a press unit 180 includes a pair of pressing blocks 181 and 182, the pair of pressing blocks 181 and 182 are moved in directions facing each other, and a stack of the first electrode 11, the separator 14, and the second electrode 12 may be arranged between the pressing blocks 181 and 182. Then, the press unit 180 presses the stacked first electrode 11, separator 14, and second electrode 12 while heating and pressing the stack, thereby adhering the first electrode 11, the separator 14, and the second electrode 12 therebetween.

In addition, the press unit 180 may further include press heaters 183 and 184 for heating the pair of pressing blocks 181 and 182, so that the pair of pressing blocks 181 and 182 can heat and press the stack. Accordingly, thermal fusion among the first electrode 11, the separator 14, and the second electrode 12 in the stack can be better achieved, resulting in more robust adhesion.

The pair of pressing blocks 181 and 182 may have a pressing surface, and horizontal and vertical lengths of the pressing surface may be greater than horizontal and vertical lengths of the stack. The pair of pressing blocks 181 and 182 may include a first pressing block 181 and a second pressing block 182, and the first pressing block 181 and the second pressing blocks 182 may be provided as rectangular blocks having a rectangular parallelepiped shape.

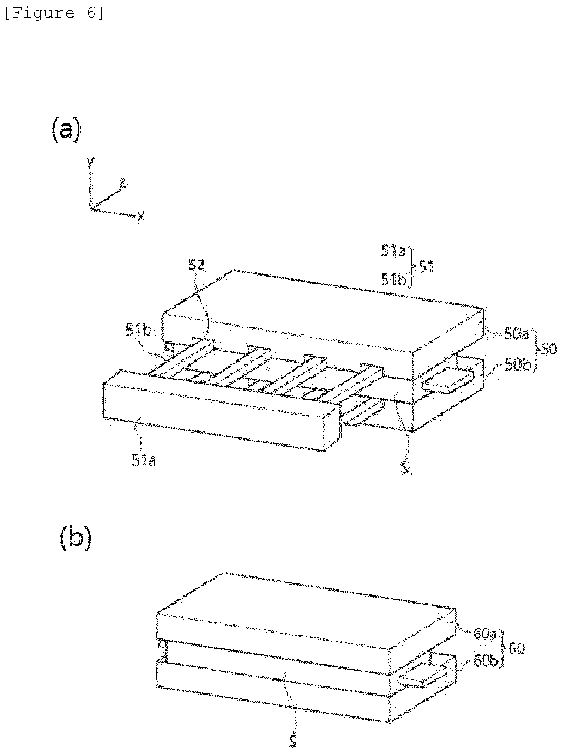

FIG. 6(a) is a perspective view showing a first press unit 50 according to an exemplary embodiment of the present invention, and FIG. 6(b) is a perspective view showing a second press unit 60 according to an exemplary embodiment of the present invention.

Referring to FIG. 6(a), the first press unit 50 may heat and press the stack S while the stack S is fixed by a gripper 51. The first press unit 50 includes a pair of first pressing blocks 50a and 50b, and the pair of first pressing blocks 50a and 50b has pressing surfaces for pressing, which are all planar surfaces except for a groove of a shape corresponding to a fixing portion 51b of the gripper 51.

The gripper 51 may include a main body 51a having dimensions corresponding to a length (x) and a height (y) of the stack S or greater than the length (x) and height (y) of the stack S, and a plurality of fixing portions 51b each provided on one surface of the main body 51a in the form of a pillar or a plate extending along a width (z) direction of the stack S. Here, the length (x) of the stack S may refer to a portion of the stack with the longest distance from one end to the other end of the stack S, the height (y) may refer to a distance in a stacking direction of the stack S, and the width (z) may refer to a distance horizontally crossing an upper surface of the stack S.

The fixing portions 51b can be position-adjusted along the height direction of the main body 51a, so that the fixing portions 51b can fix the stack S while being in contact with upper and lower surfaces of the stack S. Then, the pair of first pressing blocks 50a and 50b of the first press unit 50 are moved in directions facing each other to surface-press one or more of the stack S and the gripper 51, making it possible to adhere the electrodes and the separator included in the stack S.

Referring to FIG. 6(b), the second press unit 60 may finally heat and press the stack S that has been primarily heated and pressed by the first press unit 50. The second press unit 60 includes a pair of second pressing blocks 60a and 60b, and the pair of the second pressing blocks 60a and 60b may be moved in directions facing each other to surface-press the stack S. In addition, the pair of second pressing blocks 60a and 60b included in the second press unit 60 may have pressing surfaces for pressing in contact with the stack S, which are all planar surfaces.

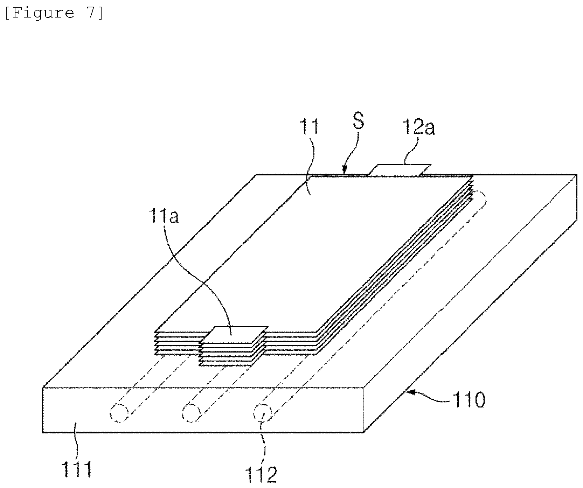

FIG. 7 is a perspective view showing a stack table in the electrode assembly manufacturing apparatus according to the exemplary embodiment of the present invention.

Referring to FIGS. 2, 3, and 7, the first electrode 11, the separator 14, and the second electrode 12 may be stacked on the stack table 110 in the form of the first electrode 11 and the second electrode 12 being alternately arranged between respective folds of the separator 14.

In addition, the stack table 110 may include a table body 111 on which the first electrode 11, the separator 14, and the second electrode 12 are stacked and a stack table heater 112 that heats the stacked stack S by heating the table body 111.

The first electrode 11 may be configured as a positive electrode, and the second electrode 12 may be configured as a negative electrode, but the present invention is not necessarily limited thereto. For example, the first electrode 11 may be configured as a negative electrode, and the second electrode 12 may be configured as a positive electrode.

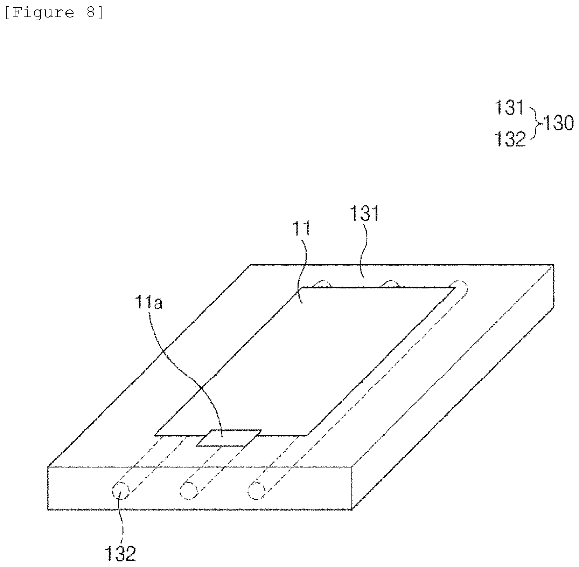

FIG. 8 is a perspective view showing a first electrode seating table in the electrode assembly manufacturing apparatus according to the exemplary embodiment of the present invention.

Referring to FIGS. 2, 3, and 8, the first electrode supply unit 130 may supply the first electrode 11 to the first electrode stack unit 150 while heating the first electrode 11.

In addition, the first electrode supply unit 130 may include a first electrode seating table 131 on which the first electrode 11 is seated before being stacked on the stack table 110 by the first electrode stack unit 150 and a first electrode heater 132 that heats the first electrode 11 by heating the first electrode seating table 131.

Note that the first electrode supply unit 130 may further include a first electrode roll 133 on which the first electrode 11 is wound in the form of a sheet, a first cutter 134 that cuts the first electrode 11 at regular intervals to form first electrodes 11 with a predetermined size when the first electrode 11 in the form of a sheet wound on the first electrode roll 133 is unwound and supplied, a first conveyor belt 135 that moves the first electrodes 11 cut by the first cutter 134, and a first electrode supply head 136 that vacuum-suctions the first electrodes 11 being conveyed by the first conveyor belt 135 to seat the same on the first electrode seating table 131. Here, the first cutter 134 may cut the sheet-like first electrode 11 so that a first electrode tab 11a is formed to protrude at an end portion.

In this case, the cut first electrode 11 may be stacked in the first electrode magazine, and the description related to FIG. 1 may be applied to the method of picking up the first electrode 11 stacked in the first electrode magazine.

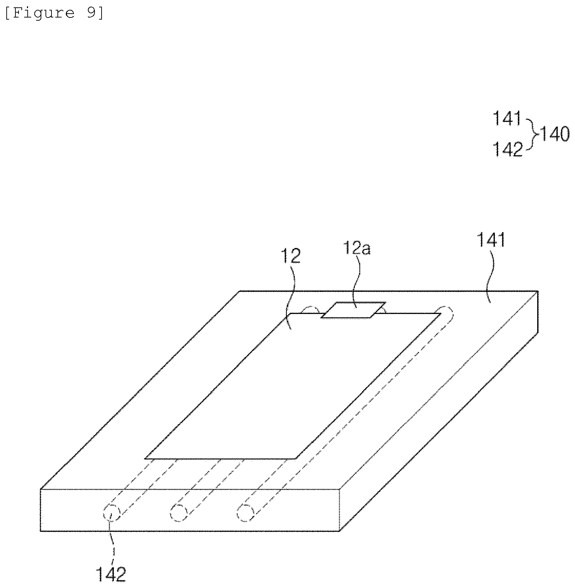

FIG. 9 is a perspective view showing a second electrode seating table in the electrode assembly manufacturing apparatus according to an exemplary embodiment of the present invention.

Referring to FIGS. 2, 3, and 9, the second electrode supply unit 140 may supply the second electrode 12 to the second electrode stack unit 160 while heating the second electrode 12.

In addition, the second electrode supply unit 140 may include a second electrode seating table 141 on which the second electrode 12 is seated before being stacked on the stack table 110 by the second electrode stack unit 160 and a second electrode heater 142 that heats the second electrode 12 by heating the second electrode seating table 141.

Note that the second electrode supply unit 140 may further include a second electrode roll 143 on which the second electrode 12 is wound in the form of a sheet, a second cutter 144 that cuts the second electrode 12 at regular intervals to form second electrodes 12 with a predetermined size when the second electrode 12 in the form of a sheet wound on the second electrode roll 143 is unwound and supplied, a second conveyor belt 145 that moves the second electrodes 12 cut by the second cutter 144, and a second electrode supply head 146 that vacuum-suctions the second electrodes 12 being conveyed by the second conveyor belt 145 to seat the same on the second electrode seating table 141. Here, the second cutter 144 may cut the sheet-like second electrode 12 so that a second electrode tab 12a is formed to protrude at an end portion.

In this case, the cut second electrode 12 may be stacked in the second electrode magazine, and the description related to FIG. 1 may be applied to the method of picking up the second electrode 12 stacked in the second electrode magazine.

In an exemplary embodiment of the present invention, the first electrode stack unit may include a first suction head for vacuum-suctioning the first electrode seated on the first electrode seating table, and the second electrode stack unit may include a second suction head for vacuum-suctioning the second electrode seated on the second electrode seating table.

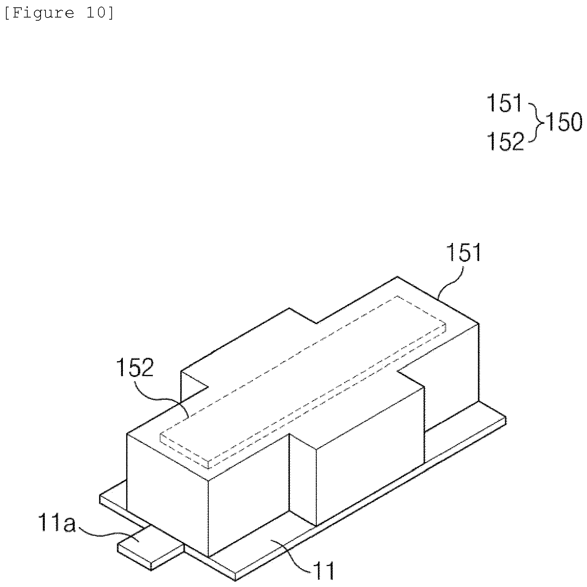

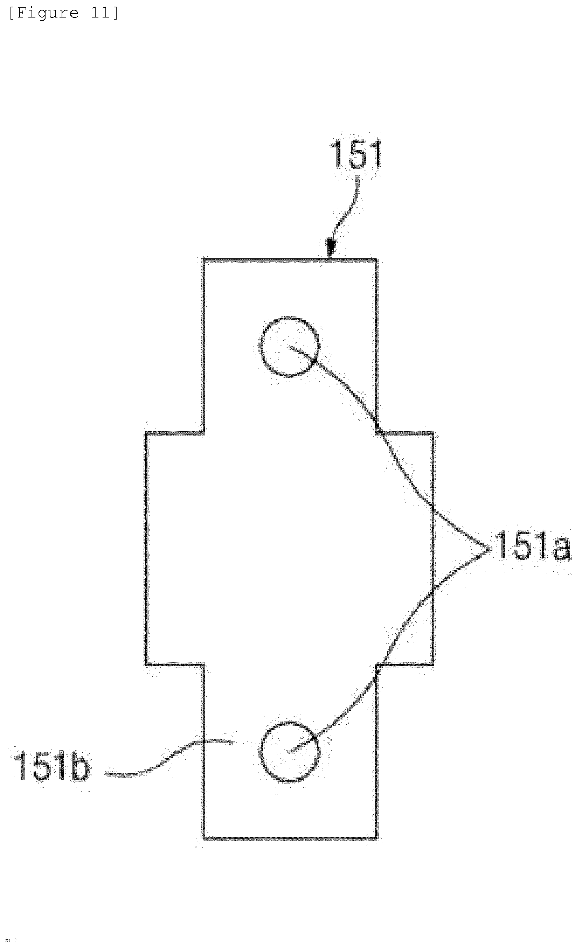

FIG. 10 is a perspective view showing a first suction head in the electrode assembly manufacturing apparatus according to the exemplary embodiment of the present invention, and FIG. 11 is a bottom view showing the first suction head in the electrode assembly manufacturing apparatus according to the exemplary embodiment of the present invention.

Referring to FIGS. 2, 3, 10, and 11, the first electrode stack unit 150 may stack the first electrode 11 on the stack table 110.

In addition, the first electrode stack unit 150 may include a first suction head 151 and a first moving unit 153.

The first suction head 151 can vacuum-suction the first electrode 11 seated on the first electrode seating table 131. In this case, the first suction head 151 has a vacuum suction hole 151a formed on a bottom surface 151b, and can suction the first electrode 11 through the vacuum suction hole 151a to fix the first electrode 11 to the bottom surface 151b of the first suction head 151. Here, the first suction head 151 may be formed therein with a passage connecting the vacuum suction hole 151a and a vacuum suction device (not shown).

The first moving unit 153 can move the first suction head 151 to the stack table 110 so that the first suction head 151 can stack the first electrode 11 seated on the first electrode seating table 131 on the stack table 110.

In addition, the second electrode stack unit 160 can stack the second electrode 12 on the stack table 110. Here, the second electrode stack unit 160 may have the same structure as the first electrode stack unit 150 described above. In this case, the second electrode stack unit 160 may include a second suction head 161 and a second moving unit 163.

The second suction head 161 can vacuum-suction the second electrode 12 seated on the second electrode seating table 141. In this case, the second moving unit 163 can move the second suction head 161 to the stack table 110 so that the second suction head 161 can stack the second electrode 12 seated on the second electrode seating table 141 on the stack table 110.

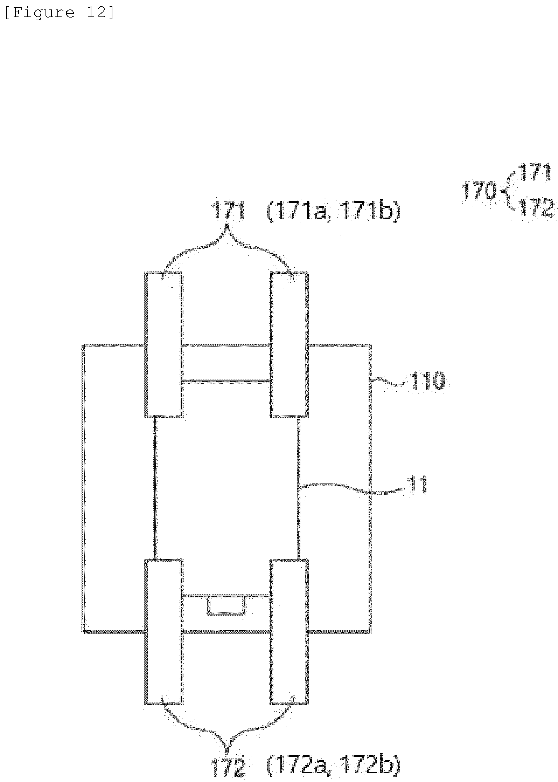

FIG. 12 is a plan view showing a holding mechanism and a stack table in the electrode assembly manufacturing apparatus according to the exemplary embodiment of the present invention.

Referring to FIGS. 2, 3, and 12, when the first electrode 11 or the second electrode 12 is stacked on the stack table 110, the holding mechanism 170 can fix the first electrode 11 or the second electrode 12 to the stack table 110 while gripping the first electrode 11 or the second electrode 12.

In addition, the holding mechanism 170 can press and fix an upper surface of the first electrode 11 stacked on the uppermost side on the stack table 110 when stacking the first electrodes 11 on the stack table 110, and can press and fix an upper surface of the second electrode 12 stacked on the uppermost side on the stack table 110 when stacking the second electrodes 12 on the stack table 110. Furthermore, the holding mechanism can press and fix an upper surface of a stack of the first electrode 11, the separator 14, and the second electrode 12 stacked on the stack table 110.

That is, when forming the stack while positioning and stacking the first electrode 11 and the second electrode 12 between the folds of the separator 14, the holding mechanism 170 grips the uppermost surface of the stack in a manner of pressing the same toward the stack table 110, making it possible to prevent the stack from being separated from the stack table 110.

Note that the holding mechanism 170 may include, for example, a first holding mechanism 171 and a second holding mechanism 172, and can fix both sides of the first electrode 11 or the second electrode 12.

In an example where the zigzag folding is performed while the stack table 110 is rotated as described above, when the holding mechanism 170 grips the first electrode 11 or the second electrode 12 and then the stack table 110 is rotated, the separator 14 may be unwound from the separator roll 122 in proportion to a rotation amount of the stack table 110 and supplied to the stack table 110 side.

Note that, for example, the holding mechanism 170 and the stack table 110 may be connected or coupled to a rotating device (not shown). Here, when the holding mechanism 170 grips the first electrode 11 or the second electrode 12, the rotating device can rotate the holding mechanism 170 and the stack table 110.

Then, when a stack with the first electrode 11 and the second electrode 12 arranged between the folds of the separator 14 is completed, the stack is fixed by a gripper, moved to the press unit described above, and then heated and pressed by the press unit.

In an exemplary embodiment of the present invention, the electrode assembly manufacturing apparatus may further include a rotation unit configured to rotate the stack table, the first electrode stack unit may be provided on one side of the rotation unit and the second electrode stack unit may be provided on the other side of the rotation unit for enabling zigzag folding in such a manner that the separator is positioned between the first electrode and the second electrode, and the rotation unit may be configured to alternately proceed with rotating the stack table toward one side so as to face the first suction head of the first electrode stack unit when stacking the first electrode and rotating the stack table toward the other side so as to face the second suction head of the second electrode stack unit when stacking the second electrode.

The electrode assembly manufacturing apparatus according to another exemplary embodiment of the present invention may further include a vision device for vision inspecting the first electrode and the second electrode.

The electrode assembly manufacturing apparatus according to another exemplary embodiment of the present invention may further include a rotation unit for rotating the stack table and a vision device for vision inspecting the first electrode and the second electrode.

The electrode assembly manufacturing apparatus according to another exemplary embodiment of the present invention may include a stack table moving unit for moving the stack table left and right or a separator guide unit for moving the separator left and right, and may further include a vision device for vision inspecting the first electrode and the second electrode. The stack table moving unit and the separator guide unit are not limited in forms as long as they respectively perform the functions of moving the stack table and the separator left and right, and devices generally used in the relevant field may be used.

In an exemplary embodiment of the present invention, the electrode assembly manufacturing apparatus may include a stack table moving unit configured to move the stack table left and right, the first electrode stack unit may be provided on one side of the stack table and the second electrode stack unit may be provided on the other side of the stack table for enabling zigzag folding in such a manner that the separator is positioned between the first electrode and the second electrode, and the stack table moving unit may be configured to alternately proceed with moving the stack table toward one side so as to face the first suction head of the first electrode stack unit when stacking the first electrode and moving the stack table toward the other side so as to face the second suction head of the second electrode stack unit when stacking the second electrode.

In an exemplary embodiment of the present invention, the electrode assembly manufacturing apparatus may include a separator guide unit for moving the separator left and right, and the separator guide unit may be configured to repeatedly proceed with moving a separator left and right, which is supplied to the stack table, for enabling zigzag folding in such a manner that the separator is positioned between the first electrode and the second electrode.

That is, the electrode assembly manufacturing apparatus according to an exemplary embodiment of the present invention may further include an additional component, depending on the method of moving the stack table or the method of supplying the separator.

In an exemplary embodiment of the present invention, the vision device may include a first camera and a second camera. The first camera may capture a first electrode seated on the first electrode seating table from the first electrode supply unit, and the second camera may capture a second electrode seated on the second electrode seating table from the second electrode supply unit. A stacking quality of the first electrode and the second electrode can be inspected through image information obtained through the capturing of the first camera and the second camera. More specifically, seating positions, sizes, stacking states, and the like of the first electrode and second electrode can be inspected.

In an exemplary embodiment of the present invention, the first electrode may be a positive electrode, and the second electrode may be a negative electrode. In contrast, the first electrode may be a negative electrode, and the second electrode may be a positive electrode.

In the present specification, the description of the electrode assembly manufacturing apparatus may be applied to the electrode assembly manufacturing method and the electrode assembly, and vice versa.

In addition, in an exemplary embodiment of the present invention, the positive electrode is manufactured by, for example, applying a mixture of a positive electrode active material, a conductive material, and a binder on a positive electrode current collector and then drying the same, and if necessary, a filler is added to the mixture. For the materials used in this case, materials that are commonly used in the relevant field may be used.

Specifically, examples of the positive electrode active material may include a layered compound such as lithium cobalt oxide (LiCoO₂) and lithium nickel oxide (LiNiO₂), or a compound substituted with one or more transition metals; a lithium manganese oxide such as chemical formula Li₁₊ₓMn₂₋ₓO₄ (where x is 0 to 0.33), LiMnO₃, LiMn₂O₃ and LiMnO₂; a lithium copper oxide (Li₂CuO₂); a vanadium oxide such as LiV₃O₈, LiFe₃O₄, V₂O₅ and Cu₂V₂O₇; a Ni-site type lithium nickel oxide represented by chemical formula LiNi₁₋ₓMₓO₂ (where M is Co, Mn, Al, Cu, Fe, Mg, B or Ga, and x is 0.01 to 0.3); a lithium manganese composite oxide represented by chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li of the chemical formula is substituted with an alkaline earth metal ion; a disulfide compound; and Fe₂(MoO₄)₃, but are not limited thereto.

Specifically, the positive electrode current collector is not particularly limited as long as it has high conductivity without causing a chemical change in the battery. For example, stainless steel, aluminum, nickel, titanium, fired carbon, aluminum or stainless steel each surface-treated with carbon, nickel, titanium, silver, or the like, or the like may be used. Specifically, aluminum may be used. The positive electrode current collector may have microscopic irregularities formed on a surface to enhance an adhesive force of the positive electrode active material, and may be used in various forms such as a film, a sheet, a foil, a net, a porous body, a foamed body, or a non-woven fabric body. In addition, the positive electrode current collector may generally have a thickness ranging from 3 µm to 500 µm.

The conductive material may typically be added in an amount of 1 to 50 wt% based on a total weight of the mixture including the positive electrode active material. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The binder is a component assisting in the bonding of the active material, the conductive material, and the like and the bonding to the current collector, and is usually added in an amount of 1 to 50 wt% based on the total weight of the mixture including the positive electrode active material. Examples of such a binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorine rubber, various copolymers, and the like.

The filler is selectively used as a component to suppress expansion of the positive electrode, and is not particularly limited as long as it is a fibrous material that does not cause chemical changes in the battery. For example, an olefin-based polymer such as polyethylene and polypropylene; and a fibrous material such as glass fiber and carbon fiber may be used.

In addition, in an exemplary embodiment of the present invention, the negative electrode is manufactured by applying, drying and pressing the negative electrode active material on a negative electrode current collector, and if necessary, a conductive material, a binder, a filler, and the like as described above may be optionally further included. Also in this case, materials that are commonly used in the art may be used.

Specifically, as the negative electrode active material, for example, carbon such as non-graphitizable carbon and graphite-based carbon; metal composite oxides such as LixFe₂O₃ (0≤x≤1), LiₓWO₂ (0≤x≤1), and SnₓMe₁₋ₓMe'yOz (Me: Mn, Fe, Pb, Ge; Me': Al, B, P, Si, elements of Groups 1, 2 and 3 of the periodic table, and halogens; 0<x≤1; 1≤y≤3; 1≤z≤8); lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; a conductive polymer such as polyacetylene; a Li-Co-Ni based material, and the like may be used.

Such a negative electrode current collector is not particularly limited as long as it has conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, like the positive electrode current collector, the negative electrode current collector may have microscopic irregularities formed on a surface to enhance an adhesive force of the negative electrode active material, and may be used in various forms such as a film, a sheet, a foil, a net, a porous body, a foamed body, or a non-woven fabric body. In addition, the negative electrode current collector may generally have a thickness ranging from 3 µm to 500 µm.

In an exemplary embodiment of the present invention, the separator may be an organic/inorganic composite porous SRS (Safety-Reinforcing Separator). The SRS may have a structure in which a coating layer component including inorganic particles and a binder polymer is applied on a polyolefin-based separator substrate.

Since the SRS does not undergo high-temperature thermal contraction due to the heat resistance of the inorganic particles, even if the electrode assembly is penetrated by a needle-like conductor, an elongated length of the safety separator can be maintained.

Such an SRS may have a uniform pore structure formed by an interstitial volume among inorganic particles as a coating layer component, in addition to a pore structure included in the separator substrate itself. The pores may not only significantly alleviate any external impacts applied to the electrode assembly, but may also facilitate the migration of lithium ions through the pores, as well as enable a large amount of electrolyte solution to be filled in the pores to show a high impregnation rate, thereby promoting improved performance of the battery.

In an exemplary embodiment of the present invention, the separator has separator surplus portions extending on both sides beyond widths of the positive electrode and the negative electrode based on a width direction, and has a structure in which a coating layer thicker than a thickness of the separator is formed on one surface or both surfaces of both sides of the separator surplus portions in order to prevent shrinkage of the separator.

In an exemplary embodiment of the present invention, the separator surplus portions may each have a size of 5% to 12% of the width of the separator.

In an exemplary embodiment of the present invention, the coating layer may be coated on both surfaces of the separator over a size of 50% to 90% of the width of the separator surplus portion on one side. In addition, the widths of the coating layers on both surfaces may be the same as or different from each other.

In an exemplary embodiment of the present invention, the coating layer may include inorganic particles and a binder polymer.

In an exemplary embodiment of the present invention, examples of the polyolefin-based separator component may include high-density polyethylene, linear low-density polyethylene, low-density polyethylene, ultra-high molecular weight polyethylene, polypropylene, derivatives thereof, or the like.

In an exemplary embodiment of the present invention, the thickness of the coating layer may be smaller than the thickness of the first electrode or second electrode. In a specific example, the thickness of the coating layer may be 30% to 99% of the thickness of the first electrode or the second electrode.

In an exemplary embodiment of the present invention, the coating layer may be formed by wet coating or dry coating.

In an exemplary embodiment of the present invention, the polyolefin-based separator substrate and the coating layer may exist in a form in which pores on the surface of the substrate and the coating layer are anchored with each other, whereby the separator substrate and the active layer may be bonded physically firmly. In this case, the substrate and the active layer may have a thickness ratio from 9:1 to 1:9 and, specifically 5:5, considering the physical bonding force and the pore structure existing on the separator.

In an exemplary embodiment of the present invention, the inorganic particle may be inorganic particles that are commonly used in the art. The inorganic particles serve to form fine pores by enabling formation of empty spaces between the inorganic particles, and also serve as a kind of spacer that can maintain the physical shape. In addition, since the inorganic particles generally have properties that do not change their physical properties even at high temperatures of 200°C or higher, the resultant organic/inorganic composite porous film has excellent heat resistance.

Additionally, the inorganic particles are not particularly limited as long as they are electrochemically stable. That is, the inorganic particles that can be used in the present invention are not particularly limited as long as they do not undergo oxidation and/or reduction reactions in an operating voltage range of a battery to which they are applied (for example, 0 to 5 V based on Li/Li+). In particular, the use of inorganic particles having ion transport ability may promote improved performance by increasing the ionic conductivity in the electrochemical device. Thus, use of inorganic particles having ionic conductivity as high as possible is preferable. In addition, when the inorganic particles have a high density, it is difficult to disperse the inorganic particles during coating, and there is also a problem of weight increase during battery manufacturing. Therefore, use of inorganic particles having density as low as possible is preferable. In addition, inorganic materials having high permittivity contribute to an increase in the degree of dissociation of electrolyte salt, such as a lithium salt, in a liquid electrolyte, thereby improving the ionic conductivity of the electrolyte solution.

For the above-described reasons, the inorganic particles may be one or more types selected from the group consisting of inorganic particles having piezoelectricity and inorganic particles having lithium-ion transport ability.

The inorganic particles having piezoelectricity refer to a material that is a nonconductor at normal pressure but has a physical property of conducting electricity due to a change in an internal structure when a certain pressure is applied. The inorganic particles having piezoelectricity not only exhibit high-permittivity characteristics with a permittivity constant of 100 or more, but also serve to generate an electric potential difference between opposite surfaces by causing one surface to be positively charged and the other surface to be negatively charged due to charges generated when they are subjected to tension or compression by applying a certain pressure.

In a case where the inorganic particles having the above-described characteristics are used as a coating layer component, when an internal short circuit of both the electrodes occurs due to an external impact, such as by a needle-like conductor, the positive electrode and the negative electrode may not directly come into contact with each other due to the inorganic particles coated on the separator. Moreover, due to the piezoelectricity of the inorganic particles, an electric potential difference may occur in the particles, whereby electron movement, i.e., the flow of a minute current, may occur between both the electrodes, leading to a gentle reduction in the voltage of the battery and, thus, an improvement in safety.

Examples of materials for the inorganic particles having piezoelectricity may be one or more types selected from the group consisting of BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) and hafnia (HfO₂), but are not limited thereto.

The inorganic particles having lithium-ion transport ability refer to inorganic particles containing a lithium element but not storing lithium and instead having a function of migrating lithium ions. The inorganic particles having lithium-ion transport ability can transport and migrate lithium ions due to a kind of defect in a particle structure. As a result, the lithium ionic conductivity in the battery may be improved, thereby improving battery performance.

Examples of materials for the inorganic particles having lithium-ion transport ability may be one or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), glass of (LiAlTiP)ₓO_{y} (0<x<4, 0<y<13) series, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), glass of SiS₂ (LiₓSi_{y}S_{z}, 0<x<3, 0<y<2, 0<z<4) series, and glass of P₂S₅ (LiₓP_{y}S_{z}, 0<x<3, 0<y<3, 0<z<7) series, but are not limited thereto.

A composition ratio of the inorganic particles and the binder polymer, which are components of the coating layer, is not particularly limited, but may be adjusted within a range from 10:90 to 99:1 by weight%, and is preferably within a range from 80:20 to 99:1 by weight%. If the composition ratio is less than 10:90 by weight%, the content of the polymer becomes excessively large, so the pore size and porosity may be reduced due to a decrease in the empty space formed between the inorganic particles, finally resulting in deterioration in the battery performance. On the other hand, if the composition ratio exceeds 99:1 by weight%, the content of the polymer is too small, so the mechanical properties of the final organic/inorganic composite porous separator may be deteriorated due to weakened adhesive force between the inorganic materials.

In an exemplary embodiment of the present invention, the binder polymer may be a binder polymer that is commonly used in the art.

The coating layer of the organic/inorganic composite porous separator may further include other commonly known additives, in addition to the above-described inorganic particles and binder polymer.

In an exemplary embodiment of the present invention, the coating layer may be referred to as an active layer.

### <Explanation of Reference Numerals and Symbols>

1: electrode pickup unit
2: uppermost electrode among stacked electrodes
3: second one electrode
4: plurality of other electrodes and stuck-electrodes prevention sheets
5: temperature sensor unit
6: temperature control unit
7: first magazine unit
8: stuck-electrodes prevention sheet
10: electrode assembly
11: first electrode
11a: first electrode tab
12: second electrode
12a: second electrode tab
14: separator
51: gripper
51a: main body
51b: fixing portion
100: electrode assembly manufacturing apparatus
110: stack table
111: table body
112: stack table heater
120: separator supply unit
121: separator heating unit
122: separator roll
130: first electrode supply unit
131: first electrode seating table
132: first electrode heater
133: first electrode roll
134: first cutter
135: first conveyor belt
136: first electrode supply head
140: second electrode supply unit
141: second electrode seating table
142: second electrode heater
143: second electrode roll
144: second cutter
145: second conveyor belt
146: second electrode supply head
150: first electrode stack unit
151: first suction head
151a: vacuum suction hole
151b: bottom surface
152: first head heater
153: first moving unit
160: second electrode stack unit
161: second suction head
162: second head heater
163: second moving unit
170: holding mechanism
171: first holding mechanism
172: second holding mechanism
180: press unit
181: first pressing block
182: second pressing block
183, 184: press heater
S: stack

## Claims

1. A system including
a stuck-electrodes prevention sheet (8) having the form of a net; and
an electrode supply device comprising:
a first magazine unit (7) in which a plurality of electrodes (2, 3, 4) are stacked, wherein the stuck-electrodes prevention sheet (8) arranged between the plurality of respective electrodes (2, 3, 4);
an electrode pickup unit (1) configured to pick up an uppermost electrode (2) among the plurality of electrodes (2, 3, 4); and
a stuck-electrodes prevention sheet pickup unit configured to remove the stuck-electrodes prevention sheet (8) from the first magazine unit (7).

2. The system of claim 1, wherein the electrodes and stuck-electrodes prevention sheets (8) are stacked in the first magazine unit (7) such that an electrode (2) is positioned on an uppermost side and the electrodes (2, 3, 4) and stuck-electrodes prevention sheets (8) are alternately stacked.

3. The system of claim 1, further comprising a second magazine unit in which the removed stuck-electrodes prevention sheet (8) is stacked for reusing the stuck-electrodes prevention sheet (8) removed by the stuck-electrodes prevention sheet pickup unit.

4. An electrode assembly manufacturing apparatus (100) for manufacturing an electrode assembly (10) in which a first electrode (11) and a second electrode (12) are alternately arranged between folds of a separator (14), the electrode assembly manufacturing apparatus (100) comprising:
a first electrode supply unit (130) configured to supply the first electrode (11) to a stack table side;
a second electrode supply unit (140) configured to supply the second electrode (12) to the stack table side;
a separator supply unit (120) configured to supply the separator (14) to the stack table side;
a stack table (110) on which a stack (S) in which the first electrode (11), the separator (14), and the second electrode (12) are stacked such that the first electrode (11) and the second electrode (12) are alternately arranged between the folds of the separator (14) is manufactured; and
a press unit (180) configured to heat and press the stack (S) to adhere the first electrode (11), the separator (14), and the second electrode (13) therebetween, thereby manufacturing an electrode assembly (10),
wherein the assembly manufacturing apparatus (100) includes the system according to any one of claims 1 to 3, wherein at least one of the first electrode supply unit (130) and the second electrode supply unit (140) is the electrode supply device of the system.

5. An electrode supply method comprising:
(S1) stacking a plurality of electrodes (2, 3, 4) and stuck-electrodes prevention sheets (8) between the plurality of respective electrodes (2, 3, 4) in a first magazine unit (7);
(S2) picking up and conveying an uppermost electrode (2) among the plurality of electrodes (2, 3, 4) to a stack table (110); and
(S3) removing a stuck-electrodes prevention sheet (8) exposed as the uppermost electrode (2) is picked up from the first magazine unit (7), wherein the stuck-electrodes prevention sheet (8) has a form of a net.

6. The electrode supply method of claim 5, further comprising (S4) performing the (S2) after removing the stuck-electrodes prevention sheet (8),
wherein the S2 to S4 are repeated until all of the electrodes (2, 3, 4) and the stuck-electrodes prevention sheets (8) inside the first magazine unit (7) are removed.

7. The electrode supply method of claim 5, further comprising:
stacking the stuck-electrodes prevention sheet (8) removed from the first magazine unit (7) in a second magazine unit; and
picking up and reusing the stuck-electrodes prevention sheet (8) from the second magazine.

8. An electrode assembly manufacturing method for manufacturing an electrode assembly (10) in which a first electrode (11) and a second electrode (12), are alternately arranged between folds of a separator (14), the electrode assembly (10) manufacturing method comprising:
supplying the first electrode (11) to a stack table side;
supplying the second electrode (12) to the stack table side;
supplying the separator (14) to the stack table side;
manufacturing a stack (S) by stacking the first electrode (11), the separator, and the second electrode (12) on the stack table (110) such that the first electrode (11) and the second electrode (12) are alternately arranged between the folds of the separator (14); and
heating and pressing the stack (S) to adhere the first electrode (11), the separator (14), and the second electrode (12) therebetween, thereby manufacturing an electrode assembly (10),
wherein at least one of the supplying the first electrode (11) to the stack table side and the supplying the second electrode (12) to the stack table side comprises the electrode supply method of any one of claims 5 to 7.

## Patentansprüche

1. System, umfassend
ein Elektroden-Haftverhinderungsblatt (8) mit der Form eines Netzes; und
eine Elektrodenzuführvorrichtung, umfassend:
eine erste Magazineinheit (7), in der mehrere Elektroden (2, 3, 4) gestapelt sind, wobei das Elektroden-Haftverhinderungsblatt (8) zwischen den jeweils mehreren Elektroden (2, 3, 4) angeordnet wird;
eine Elektrodenaufnahmeeinheit (1), die dazu ausgelegt ist, eine oberste Elektrode (2) der mehreren Elektroden (2, 3, 4) aufzunehmen; und
eine Elektroden-Haftverhinderungsblatt-Aufnahmeeinheit, die dazu ausgelegt ist, das Elektroden-Haftverhinderungsblatt (8) aus der ersten Magazineinheit (7) zu entfernen.

2. System nach Anspruch 1, wobei die Elektroden und Elektroden-Haftverhinderungsblätter (8) in der ersten Magazineinheit (7) derart gestapelt sind, dass auf einer obersten Seite eine Elektrode (2) angeordnet ist und die Elektroden (2, 3, 4) und Elektroden-Haftverhinderungsblätter (8) abwechselnd gestapelt sind.

3. System nach Anspruch 1, ferner umfassend eine zweite Magazineinheit, in der das entfernte Elektroden-Haftverhinderungsblatt (8) gestapelt wird, um das von der Elektroden-Haftverhinderungsblatt-Aufnahmeeinheit entfernte Elektroden-Haftverhinderungsblatt (8) wiederzuverwenden.

4. Elektrodenanordnungs-Herstellungsvorrichtung (100) zur Herstellung einer Elektrodenanordnung (10), in der eine erste Elektrode (11) und eine zweite Elektrode (12) abwechselnd zwischen Falten eines Separators (14) angeordnet werden, wobei die Elektrodenanordnungsherstellungsvorrichtung (100) umfasst:
eine erste Elektrodenzuführeinheit (130), die dazu ausgelegt ist, die erste Elektrode (11) einer Stapeltischseite zuzuführen;
eine zweite Elektrodenzuführeinheit (140), die dazu ausgelegt ist, die zweite Elektrode (12) der Stapeltischseite zuzuführen;
eine Separatorzuführeinheit (120), die dazu ausgelegt ist, den Separator (14) der Stapeltischseite zuzuführen;
einen Stapeltisch (110), auf dem ein Stapel (S) hergestellt wird, in dem die erste Elektrode (11), der Separator (14) und die zweite Elektrode (12) derart gestapelt werden, dass die erste Elektrode (11) und die zweite Elektrode (12) abwechselnd zwischen den Falten des Separators (14) angeordnet werden; und
eine Presseinheit (180), die dazu ausgelegt ist, den Stapel (S) zu erwärmen und zu pressen, um die erste Elektrode (11), den Separator (14) und die zweite Elektrode (13) dazwischen zu verkleben, wodurch eine Elektrodenanordnung (10) hergestellt wird,
wobei die Anordnungsherstellungsvorrichtung (100) das System nach einem der Ansprüche 1 bis 3 umfasst, wobei die erste Elektrodenzuführeinheit (130) und/oder die zweite Elektrodenzuführeinheit (140) der Elektrodenzuführvorrichtung des Systems entspricht.

5. Elektrodenzuführverfahren, umfassend:
(S1) Stapeln mehrerer Elektroden (2, 3, 4) und Elektroden-Haftverhinderungsblättern (8) jeweils zwischen den mehreren Elektroden (2, 3, 4) in einer ersten Magazineinheit (7);
(S2) Aufnehmen und Befördern einer obersten Elektrode (2) der mehreren Elektroden (2, 3, 4) zu einem Stapeltisch (110); und
(S3) Entfernen eines Elektroden-Haftverhinderungsblatts (8), das freiliegt, wenn die oberste Elektrode (2) aus der ersten Magazineinheit (7) aufgenommen wird, wobei das Elektroden-Haftverhinderungsblatt (8) die Form eines Netzes aufweist.

6. Elektrodenzuführverfahren nach Anspruch 5, ferner umfassend (S4) Durchführen von (S2) nach dem Entfernen des Elektroden-Haftverhinderungsblatts (8),
wobei die Schritte S2 bis S4 wiederholt werden, bis alle Elektroden (2, 3, 4) und die Elektroden-Haftverhinderungsblätter (8) innerhalb der ersten Magazineinheit (7) entfernt sind.

7. Elektrodenzuführverfahren nach Anspruch 5, ferner umfassend:
Stapeln des von der ersten Magazineinheit (7) entfernten Elektroden-Haftverhinderungsblatts (8) in einer zweiten Magazineinheit; und
Aufnehmen und Wiederverwenden des Elektroden-Haftverhinderungsblatts (8) aus dem zweiten Magazin.

8. Elektrodenanordnungs-Herstellungsverfahren zur Herstellung einer Elektrodenanordnung (10), in der eine erste Elektrode (11) und eine zweite Elektrode (12) abwechselnd zwischen Falten eines Separators (14) angeordnet werden, wobei das Elektrodenanordnungs-Herstellungsverfahren (10) umfasst:
Zuführen der ersten Elektrode (11) zu einer Stapeltischseite;
Zuführen der zweiten Elektrode (12) zu der Stapeltischseite;
Zuführen des Separators (14) zu der Stapeltischseite;
Herstellen eines Stapels (S) durch Stapeln der ersten Elektrode (11), des Separators und der zweiten Elektrode (12) auf dem Stapeltisch (110) derart, dass die erste Elektrode (11) und die zweite Elektrode (12) abwechselnd zwischen den Falten des Separators (14) angeordnet werden; und
Erwärmen und Pressen des Stapels (S), um die erste Elektrode (11), den Separator (14) und die zweite Elektrode (12) dazwischen zu verkleben, wodurch eine Elektrodenanordnung (10) hergestellt wird,
wobei dasZuführen der ersten Elektrode (11) zu der Stapeltischseite und/oder das Zuführen der zweiten Elektrode (12) zu der Stapeltischseite das Elektrodenzuführverfahren nach einem der Ansprüche 5 bis 7 umfasst.

## Revendications

1. Système incluant
une feuille de prévention de collage d'électrodes (8) ayant la forme d'un filet ; et
un dispositif de fourniture d'électrodes comprenant :
une première unité magasin (7) dans laquelle une pluralité d'électrodes (2, 3, 4) sont empilées, la feuille de prévention de collage d'électrodes (8) étant agencée entre la pluralité d'électrodes respectives (2, 3, 4) ;
une unité de saisie d'électrode (1) configurée pour saisir une électrode située à la position la plus haute (2) parmi la pluralité d'électrodes (2, 3, 4) ; et
une unité de saisie de feuille de prévention de collage d'électrodes configurée pour retirer la feuille de prévention de collage d'électrodes (8) à partir de la première unité magasin (7).

2. Système de la revendication 1, dans lequel les électrodes et les feuilles de prévention de collage d'électrodes (8) sont empilées dans la première unité magasin (7) de telle sorte qu'une électrode (2) soit positionnée sur un côté situé à la position la plus haute et les électrodes (2, 3, 4) et les feuilles de prévention de collage d'électrodes (8) sont empilées de manière alternée.

3. Système de la revendication 1, comprenant en outre une deuxième unité magasin dans laquelle la feuille de prévention de collage d'électrodes retirée (8) est empilée en vue d'une réutilisation de la feuille de prévention de collage d'électrodes (8) ayant été retirée par l'unité de saisie de feuille de prévention de collage d'électrodes.

4. Appareil de fabrication d'ensemble électrode (100) pour fabriquer un ensemble électrode (10) dans lequel une première électrode (11) et une deuxième électrode (12) sont agencées de manière alternée entre les plis d'un séparateur (14), l'appareil de fabrication d'ensemble électrode (100) comprenant :
une unité de fourniture de première électrode (130) configurée pour fournir la première électrode (11) à un côté de la table d'empilement ;
une unité de fourniture de deuxième électrode (140) configurée pour fournir la deuxième électrode (12) au côté de la table d'empilement ;
une unité de fourniture de séparateur (120) configurée pour fournir le séparateur (14) au côté de la table d'empilement ;
une table d'empilement (110) sur laquelle un empilement (S) dans lequel la première électrode (11), le séparateur (14), et la deuxième électrode (12) sont empilés de telle sorte que la première électrode (11) et la deuxième électrode (12) soient agencées de manière alternée entre les plis du séparateur (14) est fabriqué ; et
une unité presse (180) configurée pour chauffer et presser l'empilement (S) pour faire adhérer la première électrode (11), le séparateur (14), et la deuxième électrode (13) entre eux, permettant ainsi de fabriquer un ensemble électrode (10),
dans lequel l'appareil de fabrication d'ensemble (100) inclut le système selon n'importe laquelle des revendications 1 à 3, dans lequel au moins une unité parmi l'unité de fourniture de première électrode (130) et l'unité de fourniture de deuxième électrode (140) est le dispositif de fourniture d'électrodes du système.

5. Procédé de fourniture d'électrodes comprenant :
(S1) le fait d'empiler une pluralité d'électrodes (2, 3, 4) et des feuilles de prévention de collage d'électrodes (8) entre la pluralité d'électrodes respectives (2, 3, 4) dans une première unité magasin (7) ;
(S2) le fait de saisir et d'acheminer une électrode située à la position la plus haute (2) parmi la pluralité d'électrodes (2, 3, 4) jusqu'à une table d'empilement (110) ; et
(S3) le fait de retirer une feuille de prévention de collage d'électrodes (8) exposée comme étant l'électrode située à la position la plus haute (2) est retirée à partir de la première unité magasin (7), dans lequel la feuille de prévention de collage d'électrodes (8) a la forme d'un filet.

6. Procédé de fourniture d'électrodes de la revendication 5, comprenant en outre (S4) le fait d'effectuer l'étape (S2) après le retrait de la feuille de prévention de collage d'électrodes (8),
dans lequel les étapes S2 à S4 sont répétées jusqu'à ce que toutes les électrodes (2, 3, 4) et les feuilles de prévention de collage d'électrodes (8) à l'intérieur de la première unité magasin (7) ont été retirées.

7. Procédé de fourniture d'électrodes de la revendication 5, comprenant en outre :
le fait d'empiler la feuille de prévention de collage d'électrodes (8), retirée à partir de la première unité magasin (7), dans une deuxième unité magasin ; et
le fait de saisir et de réutiliser la feuille de prévention de collage d'électrodes (8) à partir du deuxième magasin.

8. Procédé de fabrication d'ensemble électrode pour fabriquer un ensemble électrode (10) dans lequel une première électrode (11) et une deuxième électrode (12) sont agencées de manière alternée entre les plis d'un séparateur (14), le procédé de fabrication d'ensemble électrode (10) comprenant :
le fait de fournir la première électrode (11) à un côté de la table d'empilement ;
le fait de fournir la deuxième électrode (12) au côté de la table d'empilement ;
le fait de fournir le séparateur (14) au côté de la table d'empilement ;
le fait de fabriquer un empilement (S) en empilant la première électrode (11), le séparateur, et la deuxième électrode (12) sur la table d'empilement (110) de telle sorte que la première électrode (11) et la deuxième électrode (12) soient agencées de manière alternée entre les plis du séparateur (14) ; et
le fait de chauffer et de presser l'empilement (S) pour faire adhérer la première électrode (11), le séparateur (14), et la deuxième électrode (12) entre eux, permettant ainsi de fabriquer un ensemble électrode (10),
dans lequel au moins une fourniture parmi la fourniture de la première électrode (11) au côté de la table d'empilement et la fourniture de la deuxième électrode (12) au côté de la table d'empilement comprend le procédé de fourniture d'électrodes de n'importe laquelle des revendications 5 à 7.
